# EUROPEAN PATENT SPECIFICATION

(11) **EP 3 637 804 B1**
(45) Date of publication and mention of the grant of the patent: **22.04.2026**
(21) Application number: 18837168.6
(22) Date of filing: 11.06.2018
(51) Int. Cl.: H04W 4/08, H04W 74/0833

(54) **METHOD AND DEVICE FOR ESTABLISHING USER EQUIPMENT COLLABORATION GROUP**
VERFAHREN UND VORRICHTUNG ZUR FESTLEGUNG EINER BENUTZERGERÄTE-KOLLABORATIONSGRUPPE
PROCÉDÉ ET DISPOSITIF D'ÉTABLISSEMENT DE GROUPE DE COLLABORATION D'ÉQUIPEMENTS D'UTILISATEUR

(30) Priority: 26.07.2017 CN 201710620174
(43) Date of publication of application: 15.04.2020
(73) Proprietor: Huawei Technologies Co., Ltd., Longgang District Shenzhen, Guangdong 518129 (CN)
(72) Inventor: XIANG, Zhengzheng, Shenzhen Guangdong 518129 (CN); PANG, Jiyong, Shenzhen Guangdong 518129 (CN); SU, Hongjia, Shenzhen Guangdong 518129 (CN)
(74) Representative: Maiwald GmbH
(86) International application number: PCT/CN2018/090704
(87) International publication number: WO 2019/019822

(56) References cited:
- EP-A1- 3 637 936
- CN-A- 104 105 103
- CN-A- 105 993 186
- CN-A- 106 982 083
- US-A1- 2013 064 116
- US-A1- 2017 055 282
- HUAWEI: "WF on sidelink based UE cooperation in NR", 3GPP DRAFT R1-168378, 28 August 2016 (2016-08-28), XP051143916

## Description

### TECHNICAL FIELD

This application relates to the field of wireless communications technologies, and in particular, to a method and an apparatus for establishing a user equipment cooperation group.

### BACKGROUND

With the rapid development of wireless communications technologies, supported services also develop from initial voice and short message services to currently supported wireless high-speed data communication. A quantity of wireless connections in the world is in a sustained and high-speed increase. Various new wireless service types such as internet of things, virtual reality (virtual reality, VR), and the like are emerging in a great quantity. Therefore, it requires a higher demand on the 5-generation (5-Generation, 5G) mobile communications technology system. User cooperation is one of features mainly supported by the 5G system, and can significantly improve a capacity of the system and a coverage of a network. A load of an evolved NodeB (Evolved NodeB, eNB) end can also be reduced. In this case, a premise of the user cooperation is to establish a user equipment cooperation group. US 2013 0641 16 A1 describes a wireless communications system which comprises a base station, a relay device, and a terminal device. The terminal device is operable to transmit a message to the base station via the relay device. The relay device is operable to add a relay header to the message received from the terminal device, the relay header comprising control information for controlling the transmission of subsequent messages from the terminal device to the relay device. The relay device is also operable to relay the message having the relay header added to the base station.
Further, US 2017 055282 A1 discloses an MTC device (e.g., M-UE) connecting with a D2D UE (D-UE) via D2D connection and the D-UE connects with a base station, such that the MTC device performs UL communication with the base station through the UE as a relay. The D2D UE is a UE capable of D2D communication with the MTC device. The communication between the MTC device and the D-UE is unidirectional. And, the MTC device uses the D-UE as a relay to communicate with the base station for UL communication, but may not use the D-UE as a relay for DL communication from the base station.

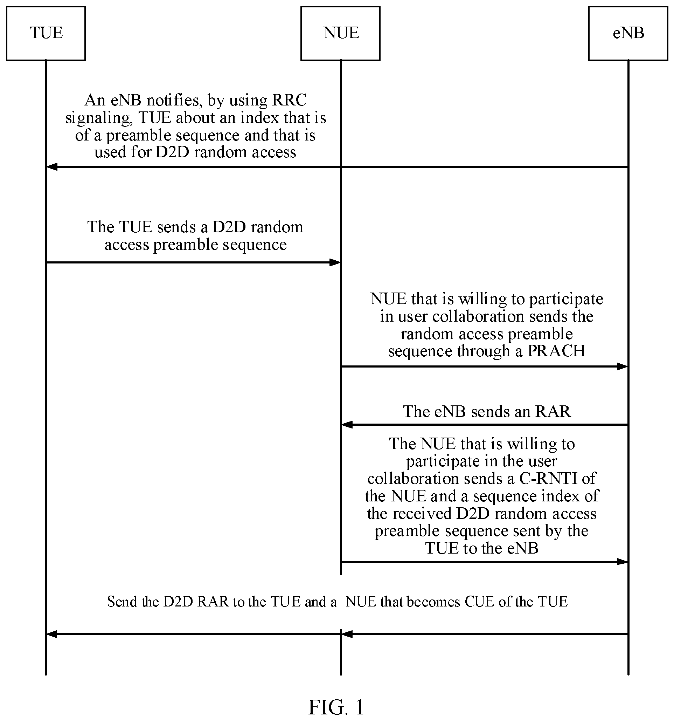

In the prior art, the user equipment cooperation group is established in a contention-based four-step random access manner. Specifically, as shown in FIG. 1, the eNB first notifies, by using radio resource control (Radio Resource Control, RRC) layer signaling, target user equipment (target user equipment, TUE) about an index that is of a preamble sequence and that is used for device to device (device to device, D2D) random access. The TUE then sends, based on an indication of the eNB, a corresponding preamble sequence that is used for the D2D random access to neighboring user equipment (neighboring user equipment, NUE). After receiving the D2D random access preamble sequence sent by the TUE, and if the NUE is willing to participate in the user cooperation, the NUE sends an ordinary random access preamble sequence to the eNB through a physical random access channel (physical random access channel, PRACH). Then after receiving the ordinary random access preamble sequence sent by the NUE, the eNB sends a random access response (random access response, RAR) to the NUE, and after receiving the RAR sent by the eNB, the NUE further sends to the eNB a cell radio network temporary identifier (cell radio network temporary identifier, C-RNTI) of the NUE and a sequence index of the received D2D random access preamble sequence sent by the TUE. Finally, the eNB decides, based on received information sent by the NUE, that whether the NUE becomes CUE of the TUE. If the NUE becomes the CUE of the TUE, the eNB use the NUE and the TUE to form a user equipment cooperation group, and a D2D RAR is sent to the TUE and a plurality of NUEs that become the CUE of the TUE, where the D2D RAR includes a group identifier allocated by the eNB for the user equipment cooperation group and includes other related information. The user equipment cooperation group is established in the foregoing manner, which causes a relatively long delay of a group establishing process and relatively low efficiency of the group establishing process.

To sum up, how to reduce the delay of the group establishing process and improve the efficiency of the group establishing process is a current problem that needs to be resolved.

### SUMMARY

This application provides a method and apparatus for establishing a user equipment cooperation group, thereby reducing a delay of a group establishing process and improving efficiency of the group establishing process. The invention is defined by the appended claims. Aspects or embodiments of the disclosure which do not fall under the scope of the claims are not included in the scope of invention.

According to a claimed first aspect, a method for establishing a user equipment cooperation group is provided in this application, including: receiving, by neighboring user equipment NUE, a first message sent by target user equipment TUE, where the first message includes a first preamble sequence and a data part of the TUE, and the first preamble sequence is used for random access between the TUE and the NUE; sending, by the NUE, a second message to a base station, where the second message includes a second preamble sequence and a data part of the NUE, and the second preamble sequence is used for random access between the NUE and the base station; and receiving, by the NUE, a third message sent by the base station, where the third message includes a user equipment cooperation group identifier, wherein the data part of the TUE comprises identification information of the TUE and user equipment cooperation request information of the TUE.

By using the foregoing method, based on the received first message sent by the TUE, if the NUE is willing to participate in user equipment cooperation of the TUE, the NUE sends the second message to the base station. After receiving the second message, the base station determines a user equipment cooperation group to which the NUE belongs, and sends the user equipment cooperation group identifier to the NUE. After receiving the user equipment cooperation group identifier, the NUE determines the user equipment cooperation group to which the NUE belongs. The user equipment cooperation group is established in the foregoing manner, which reduces a delay of a group establishing process, and improves efficiency of the group establishing process.

In a possible design, the data part of the TUE includes identification information of the TUE and/or user equipment cooperation request information of the TUE.

By using the method, the NUE determines, based on the received identification information of the TUE and/or user equipment cooperation request information of the TUE, a TUE that needs to perform the user equipment cooperation.

In a possible design, the data part of the TUE further includes type indication information, used to indicate a type of the first message.

By using the method, the NUE determines, based on the type of the first message, that the first message is a message that is between devices and that is sent by the TUE.

In a possible design, the data part of the NUE includes at least one of identification information of the NUE, identification information of the TUE, an index of the first preamble sequence, or a channel quality indicator of the TUE.

In a possible design, the data part of the NUE further includes type indication information, used to indicate a type of the second message.

By using the method, the base station determines, based on the type of the second message, that the second message is a message between a device and the base station.

According to a non-claimed second aspect, a method for establishing a user equipment cooperation group is provided in this application, including: receiving, by target user equipment TUE, radio resource control RRC signaling sent by a base station; determining, by the TUE based on the RRC signaling, a device to device D2D physical random access channel PRACH resource that is configured by the base station for the TUE; sending, by the target user equipment, a first message to neighboring user equipment NUE through the PRACH resource, where the first message includes a first preamble sequence and a data part of the TUE, and the first preamble sequence is used for random access between the TUE and the NUE; and receiving, by the TUE, a fourth message sent by the base station, where the fourth message includes a user equipment cooperation group identifier.

In a possible design, the data part of the TUE includes identification information of the TUE and/or user equipment cooperation request information of the TUE.

In a possible design, the data part of the TUE further includes type indication information, used to indicate a type of the first message.

In a possible design, the fourth message further includes a random access response RAR and contention resolution information.

In a possible design, the fourth message further includes identification information of the NUE that becomes cooperating user equipment CUE of the TUE.

By using the method, the TUE determines, based on the received identification information of the NUE of the cooperating user equipment CUE of the TUE, a NUE that becomes the CUE of the TUE.

According to a non-claimed third aspect, a method for delivering control information is provided in this application, including: sending, by a base station, radio resource control RRC signaling to target user equipment TUE, where the RRC signaling is used to indicate a device to device D2D physical random access channel PRACH resource that is configured by the base station for the TUE; receiving, by the base station, a second message sent by neighboring user equipment NUE of the TUE, where the second message includes a second preamble sequence and a data part of the NUE, and the second preamble sequence is used for random access between the NUE and the base station; determining, by the base station based on the second message, a user equipment cooperation group, and allocating a user equipment cooperation group identifier; and sending, by the base station, a third message to the NUE and a fourth message to the TUE, where both the third message and the fourth message include the user equipment cooperation group identifier.

In a possible design, the third message further includes identification information of the TUE.

In a possible design, the fourth message further includes identification information of the NUE that becomes cooperating user equipment CUE of the TUE.

In a possible design, the fourth message further includes a random access response RAR and contention resolution information.

In a possible design, the data part of the NUE includes at least one of identification information of the NUE, identification information of the TUE, an index of a first preamble sequence, or a channel quality indicator of the TUE.

In a possible design, the data part of the NUE further includes type indication information, used to indicate a type of the second message.

In a possible design, the identification information of the TUE is carried in a data part of the TUE in a first message sent by the TUE to the NUE through the PRACH resource.

In a possible design, the first message includes a first preamble sequence and the data part of the TUE, and the first preamble sequence is used for random access between the TUE and the NUE.

In a possible design, the data part of the TUE includes the identification information of the TUE and/or user equipment cooperation request information of the TUE.

In a possible design, the data part of the TUE further includes type indication information, used to indicate a type of the first message.

In a possible design, the base station may distinguish the first message from the second message through a position of the physical random access channel PRACH resource.

According to a claimed fourth aspect, user equipment is provided in this application, including: a receiving unit, configured to receive a first message sent by target user equipment TUE, where the first message includes a first preamble sequence and a data part of the TUE, and the first preamble sequence is used for random access between the TUE and the NUE; a sending unit, configured to send a second message to a base station, where the second message includes a second preamble sequence and a data part of the NUE, and the second preamble sequence is used for random access between the NUE and the base station; where the receiving unit is further configured to receive a third message sent by the base station, and the third message includes a user equipment cooperation group identifier, wherein the data part of the TUE comprises identification information of the TUE and user equipment cooperation request information of the TUE.

By using the foregoing method, based on the received first message sent by the TUE, if the NUE is willing to participate in user equipment cooperation of the TUE, the NUE sends the second message to the base station. After receiving the second message, the base station determines a user equipment cooperation group to which the NUE belongs, and sends the user equipment cooperation group identifier to the NUE. After receiving the user equipment cooperation group, the NUE determines the user equipment cooperation group to which the NUE belongs. The user equipment cooperation group is established in the foregoing manner, which reduces a delay of a group establishing process, and improves efficiency of the group establishing process.

In a possible design, the data part of the TUE includes identification information of the TUE and/or user equipment cooperation request information of the TUE.

In a possible design, the data part of the TUE further includes type indication information, used to indicate a type of the first message.

In a possible design, the data part of the NUE includes at least one of identification information of the NUE, identification information of the TUE, an index of the first preamble sequence, or a channel quality indicator of the TUE.

In a possible design, the data part of the NUE further includes type indication information, used to indicate a type of the second message.

According to a claimed fifth aspect, user equipment is provided in this application, including: a receiving unit, configured to receive radio resource control RRC signaling sent by a base station; a processing unit, configured to determine, based on the RRC signaling, a device to device D2D physical random access channel PRACH resource that is configured by the base station for the TUE; a sending unit, configured to send a first message to neighboring user equipment NUE through the PRACH resource, where the first message includes a first preamble sequence and a data part of the TUE, and the first preamble sequence is used for random access between the TUE and the NUE; where the receiving unit is further configured to receive a fourth message sent by the base station, and the fourth message includes a user equipment cooperation group identifier, wherein the data part of the TUE comprises identification information of the TUE and user equipment cooperation request information of the TUE.

In a possible design, the data part of the TUE includes identification information of the TUE and/or user equipment cooperation request information of the TUE.

In a possible design, the data part of the TUE further includes type indication information, used to indicate a type of the first message.

In a possible design, the fourth message further includes a random access response RAR and contention resolution information.

In a possible design, the fourth message further includes identification information of the NUE that becomes cooperating user equipment CUE of the TUE.

According to a claimed sixth aspect, a base station is provided in this application, including:
a sending unit, configured to send radio resource control RRC signaling to target user equipment TUE, where the RRC signaling is used to indicate a device to device D2D physical random access channel PRACH resource that is configured by the base station for the TUE; a receiving unit, configured to receive a second message sent by neighboring user equipment NUE of the TUE, where the second message includes a second preamble sequence and a data part of the NUE, and the second preamble sequence is used for random access between the NUE and the base station; a processing unit, configured to: determine, based on the second message, a user equipment cooperation group, and allocate a user equipment cooperation group identifier, where the sending unit is further configured to send a third message to the NUE and a fourth message to the TUE, and both the third message and the fourth message include the user equipment cooperation identifier, wherein the third message further includes identification information of the TUE.

In a possible design, the fourth message further includes identification information of the NUE that becomes cooperating user equipment CUE of the TUE.

In a possible design, the fourth message further includes a random access response RAR and contention resolution information.

In a possible design, the data part of the NUE includes at least one of identification information of the NUE, identification information of the TUE, an index of a first preamble sequence, or a channel quality indicator of the TUE.

In a possible design, the data part of the NUE further includes type indication information, used to indicate a type of the second message.

In a possible design, the identification information of the TUE is carried in a data part of the TUE in a first message sent by the TUE to the NUE through the PRACH resource.

In a possible design, the first message includes a first preamble sequence and the data part of the TUE, and the first preamble sequence is used for random access between the TUE and the NUE.

In a possible design, the data part of the TUE includes the identification information of the TUE and/or user equipment cooperation request information of the TUE.

In a possible design, the data part of the TUE further includes type indication information, used to indicate a type of the first message.

In a possible design, the base station may distinguish the first message from the second message through a position of the physical random access channel PRACH resource.

According to a claimed ninth aspect, a computer-readable storage medium is provided in this application, where the computer-readable storage medium stores a computer instruction, and when the instruction is run on a computer, the computer is enabled to perform the method according to the first aspect and any design of the first aspect.

### BRIEF DESCRIPTION OF DRAWINGS

FIG. 1 is a flowchart of a method for establishing a user equipment cooperation group in the prior art;
FIG. 2 is a diagram of an application scenario according to this application;
FIG. 3 is a flowchart of a contention-based four-step random access method according to this application;
FIG. 4 is a flowchart of a contention-based two-step random access method according to this application;
FIG. 5 is a flowchart of a method for establishing a user equipment cooperation group according to this application;
FIG. 6 is a structural diagram of a first message according to this application;
FIG. 7 is a structural diagram of a second message according to this application;
FIG. 8 is a flowchart of another method for establishing a user equipment cooperation group according to this application;
FIG. 9 is a schematic diagram of user equipment according to this application;
FIG. 10 is a schematic diagram of another user equipment according to this application;
FIG. 11 is a schematic diagram of a base station according to this application; and
FIG. 12 is a schematic structural diagram of hardware of an apparatus according to this application.

### DESCRIPTION OF EMBODIMENTS

To make the objectives, technical solutions, and advantages of this application clearer, the following further describes this application in detail with reference to the accompanying drawings.

A method and an apparatus for establishing a user equipment cooperation group according to this application can resolve problems of a relatively long delay of a group establishing process and relatively low efficiency of the group establishing process that exist in the prior art. The method and the apparatus are based on a same inventive concept. Because the method and the apparatus have a similar principle to resolve a problem, for implementations of the method and the apparatus, refer to each other, and repeated content is not described again.

In embodiments of this application, in some cases, user equipment (user equipment, UE) may refer to a terminal or a mobile device, for example, a mobile phone, a personal digital assistant (English: Personal Digital Assistant, PDA for short), a handheld or laptop computer, and a similar device with a telecommunication capability. In other cases, the user equipment may refer to a device with the similar capability but itself cannot be carried, for example, a desktop computer, a set top box, or a network device. The user equipment may further refer to any hardware or software component of a communications session that can terminate a user. In addition, user equipment described in the embodiments of this application may be referred to as a subscriber unit, a subscriber station, a mobile station, a remote station, a remote terminal, a user terminal, a wireless communications device, a user agent, or a user apparatus.

In the embodiments of this application, a base station may include a base station in a conventional wireless communications system such as 2G/3G, or may include a system and a device that are used to improve a peer device in the conventional wireless communications system. Such an advanced or next generation device may be included in an evolved wireless communications standard (for example, long term evolution (English: Long Term Evolution, LTE for short)). For example, the LTE system may include an evolved universal terrestrial radio access network (Evolved Universal Terrestrial Radio Access Network, E-UTRAN for short) node B (Node B, NB), a wireless access point, or a similar component. Any such component is referred to as eNB in this specification. However, it should be understood that such component may not be eNB. For example, in a next generation communications system or a 5G communications system, the eNB of the LTE system may be replaced by "gNB".

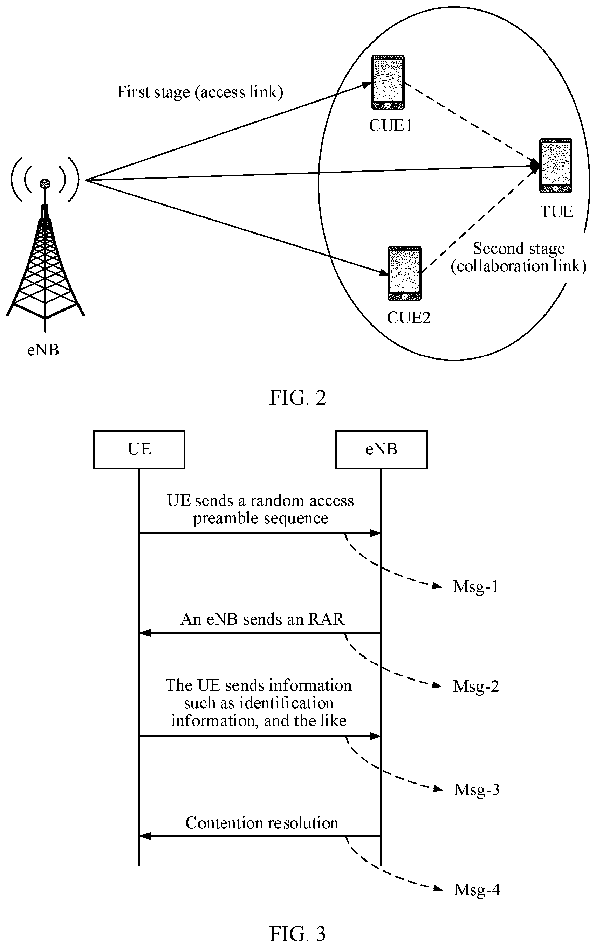

In the embodiments of this application, user equipment cooperation is one of features mainly supported by a 5-generation mobile communications technology system, and can significantly improve a capacity of the system and a coverage of a network. A load of an evolved NodeB end can also be reduced. A typical user equipment cooperation scenario is shown in FIG. 2. Transmission based on the user equipment cooperation mainly has the following two stages. The first stage is that the eNB sends data to TUE and related CUE for example, CUE 1 and CUE 2 in FIG. 2, in a multi-cast manner. The second stage is that the CUE 1 and the CUE 2 forward a correctly received signal to the TUE, where the forwarding manner may be amplify-and-forward, decode-and-forward, compress-and-forward, or the like. The TUE may decode a combination of a received transmission signal of the eNB in the first stage and a received forwarding signal of the CUE 1 and CUE 2 in the second stage, thereby improving a receiving performance. To sum up, in user equipment cooperation communication, the TUE and several CUEs serving for the TUE may form a user equipment cooperation group. For example, the TUE, the CUE 1, and the CUE 2 in FIG. 2 form a user equipment cooperation group. For any UE, the UE may be either TUE of a self-centered user equipment cooperation group, or CUE or CUEs of one or more other user equipment cooperation groups. NUE that is in the same user equipment cooperation group as the TUE is the CUE of the TUE. There may be a plurality of different user equipment cooperation groups in a same cell.

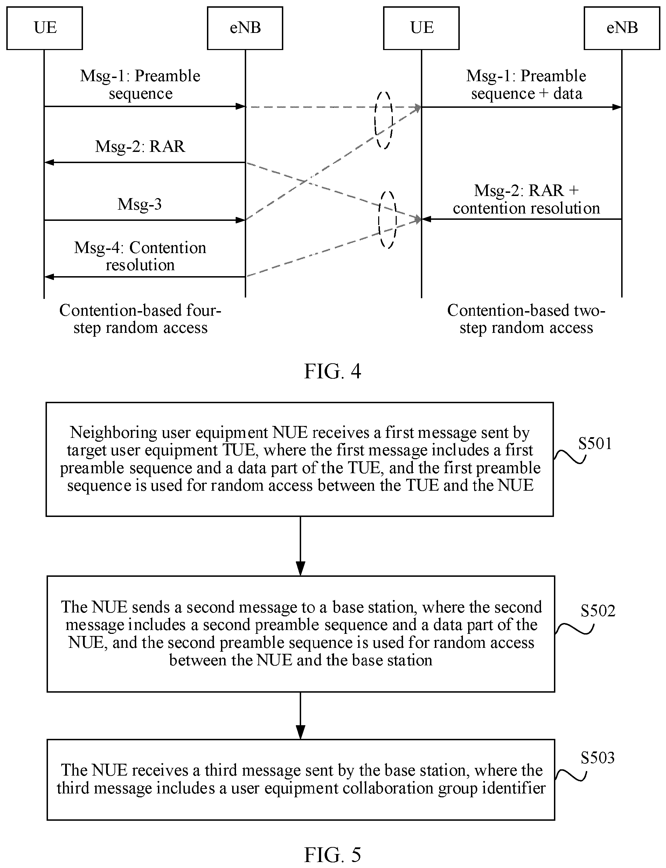

A possible manner in which the user equipment cooperation group is established is to establish the user equipment cooperation group by using contention-based four-step random access. The random access is a basic process in the wireless communications network, to enable the UE to obtain uplink synchronization and further perform uplink transmission. In the LTE network, there are two situations in contention-based random access. Situation 1 is the contention-based four-step random access, including the following 4 main steps. The first step is that the UE sends a random access preamble sequence to the eNB through a physical random access channel (physical random access channel, PRACH). The second step is that after receiving the preamble sequence sent by the UE, the eNB sends a random access response (random access response, RAR) to the UE through a physical downlink shared channel (physical downlink shared channel, PDSCH). In the random access response RAR, the eNB allocates a temporary C-RNTI to the UE, and allocates an uplink resource to data that is to be sent by the UE in the third step. The third step is that after receiving the RAR sent by the eNB, the UE may send, in a physical uplink shared channel (physical uplink shared channel, PUSCH) based on an indication of indication information of the RAR, an identification of the UE such as the C-RNTI and other related information to the eNB. And the fourth step is a contention resolution, that is, the eNB sends a message to UE that successfully performs the random access, while other UEs that fail to perform the random access need to re-perform the random access process. FIG. 3 schematically shows a process of the contention-based four-step random access, and messages sent by the UE and the eNB are sequentially referred to as a Msg-1, a Msg-2, a Msg-3 and a Msg-4. Because a delay of the contention-based four-step random access process in situation 1 is relatively long, in the prior art, situation 2 of contention-based two-step random access is also provided including the following two steps. The first step is that the UE sends a new Msg-1 to the eNB, where the new Msg-1 includes information about a random access preamble sequence, a UE identification, and the like. The second step is that the eNB sends a new Msg-2 to the UE, where the new Msg-2 includes an RAR and contention resolution information. FIG. 4 shows the contention-based two-step random access and a relationship between the contention-based two-step random access and contention-based four-step random access. That is, the Msg-1 and the Msg-3 that are in the existing contention-based four-step random access solution are combined into a new Msg-1, and the Msg-2 and the Msg-4 are combined into a new Msg-2.

In user equipment cooperation group communication, a user equipment cooperation group generally needs to be established, and user equipment in the user equipment cooperation group includes TUE and CUE. However, before the user equipment cooperation group is established, user equipment that may provide cooperation is usually user equipment near the TUE. The user equipment may be referred to as neighboring user equipment (Neighboring User equipment, NUE). To establish the user equipment cooperation group, a group identifier of the user equipment cooperation group needs to be sent to the user equipment in the user equipment cooperation group.

FIG. 5 is a flowchart of a method for establishing a user equipment cooperation group according to this application. As shown in FIG. 5, the method shows a process for one TUE and one NUE to establish the user equipment cooperation group. Furthermore, a process for one TUE and a plurality of NUEs to establish a group may be obtained in a similar manner, and the method includes the following step.

S501: The neighboring user equipment NUE receives a first message sent by the target user equipment TUE, where the first message includes a first preamble sequence and a data part of the TUE, and the first preamble sequence is used for random access between the TUE and the NUE.

Specifically, the first message may be a D2D-Msg-1. The D2D-Msg-1 is a message for random access between user equipment and includes a D2D random access preamble sequence. The D2D-Msg-1 may be delivered through a D2D PRACH resource that is configured by a base station for the TUE, and the first preamble sequence may be the D2D random access preamble sequence. The data part of the TUE includes identification information of the TUE and/or user equipment cooperation request information of the TUE, or may further include type indication information, used to indicate a type of the first message, where the type of the first message is a message between devices.

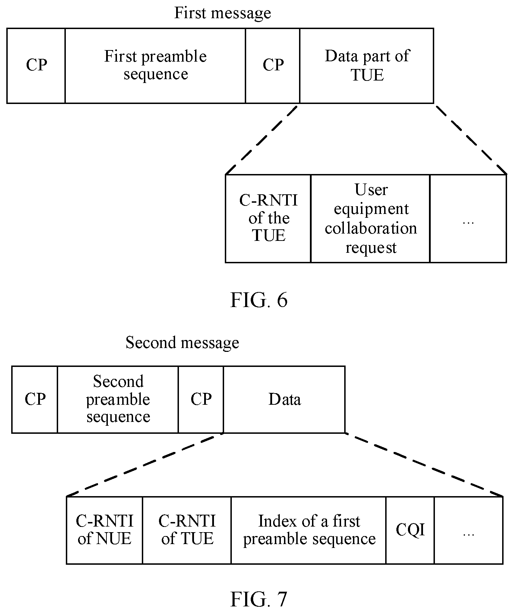

FIG. 6 is a specific structural diagram of the first message. As shown in FIG. 6, the first message includes a D2D random access preamble sequence of the TUE and the data part of the TUE. There is a cyclic prefix (cyclic prefix, CP) in front of both the D2D random access preamble sequence and the data part of the TUE. The data part of the TUE includes identification information and a user equipment cooperation request, where the identification information may be a cell radio network temporary identifier (cell radio network temporary identifier, C-RNTI). A structure of the first message may alternatively not include the CP.

S502: The NUE sends a second message to the base station, where the second message includes a second preamble sequence and a data part of the NUE, and the second preamble sequence is used for random access between the NUE and the base station.

Specifically, the second message may be a new Msg-1 in contention-based two-step random access. The NUE sends the Msg-1 to the base station through a PRACH resource. The data part of the NUE includes at least one of identification information of the NUE, identification information of the TUE, an index of a first preamble sequence, or a channel quality indicator of the TUE, and the data part of the NUE further includes type indication information, used to indicate a type of the second message.

FIG. 7 is a specific structural diagram of the second message. As shown in FIG. 7, the second message includes the second preamble sequence and the data part of the NUE. In front of the second preamble sequence and the data part of the NUE, there may be a CP, or may be no CP, which is not limited in this application. The foregoing data part of the NUE includes a C-RNTI of the NUE, a C-RNTI of the TUE, the index of the first preamble sequence, and the foregoing channel quality indicator (Channel Quality Indicator, CQI) of the TUE.

S503: The NUE receives a third message sent by the base station, where the third message includes a user equipment cooperation group identifier.

Specifically, the third message may be a new Msg-2 in the contention-based two-step random access.

In a possible implementation, after step S501, the method further includes: determining, by the NUE, the TUE based on the data part of the TUE. Specifically, the NUE determines the TUE based on the identification information of the TUE included in the data part of the TUE.

In this embodiment of this application, NUE sends, based on the received first message sent by the TUE, a second message to the base station. After receiving the second message, the base station determines a user equipment cooperation group to which the NUE belongs, and sends the user equipment cooperation group identifier to the NUE. After receiving the user equipment cooperation group, the NUE determines the user equipment cooperation group to which the NUE belongs. The user equipment cooperation group is established in the foregoing manner, which reduces a delay of a group establishing process, and improves efficiency of the group establishing process.

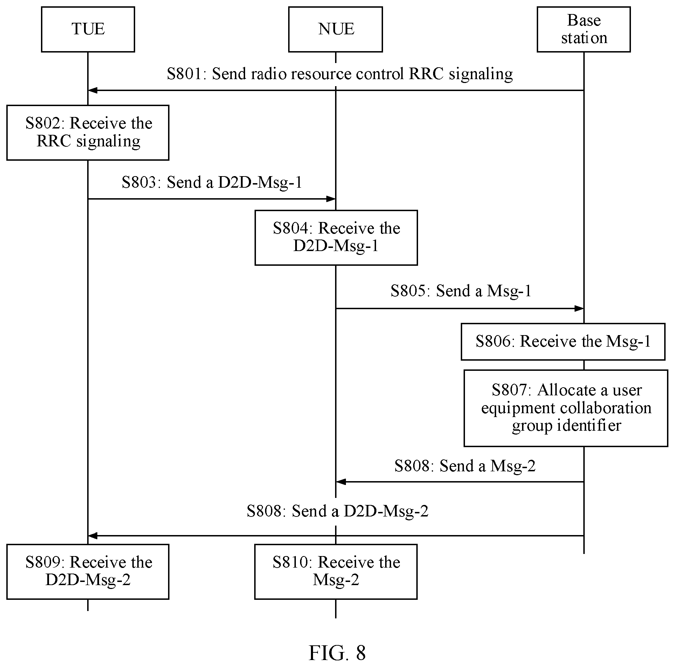

FIG. 8 is a flowchart of another method for establishing a user equipment cooperation group according to an embodiment of this application. As shown in FIG. 8, a first message may be a D2D-Msg-1, a second message may be a new Msg-1, a third message may be a new Msg-2, and a fourth message sent by a base station to the TUE may be a D2D-Msg-2. The method specifically includes the following steps.

S801: The base station sends radio resource control RRC signaling to target user equipment TUE.

S802: The TUE receives the RRC signaling, and determines a D2D PRACH resource that is configured by the base station for the TUE.

S803: The TUE sends the D2D-Msg-1 to NUE through the PRACH resource.

S804: The NUE receives the D2D-Msg-1 sent by the TUE.

S805: The NUE determines, based on a data part of the TUE, whether to participate in user equipment cooperation of the TUE, and if the NUE determines to participate in the user equipment cooperation initiated by the TUE, the NUE sends the new Msg-1 to the base station.

S806: The base station receives the new Msg-1 sent by the neighboring user equipment NUE of the TUE.

S807: The base station determines, based on the foregoing new Msg-1, a user equipment cooperation group, and allocates a user equipment cooperation group identifier.

S808: The base station sends the D2D-Msg-2 to the TUE, and sends the new Msg-2 to the NUE.

S809: The TUE receives the D2D-Msg-2 sent by the base station.

S810: The NUE receives the new Msg-2 sent by the base station.

In this embodiment of this application, the foregoing S809 and S810 are not sorted in a sequential order.

In this embodiment of this application, by using an interaction among the base station, the NUE, and the TUE, the base station determines a user equipment cooperation group of the TUE, and notifies the TUE and NUE that becomes CUE of the TUE. The user equipment cooperation group is established in the foregoing manner, which reduces a delay of a group establishing process, and improves efficiency of the group establishing process.

In a possible implementation, the base station can distinguish the D2D-Msg-1 from the new Msg-1 through a position of the physical random access channel PRACH resource.

By using the foregoing manner, the base station may quickly determine a type of the received first message or a type of the received second message.

In a possible implementation, the base station sends, through a PDSCH, the D2D-Msg-2 to the TUE and the new Msg-2 to the NUE that becomes the CUE of the TUE, and scrambles a PDCCH corresponding to the foregoing PDSCH. Specifically, in an LTE, the base station may generate, based on time-frequency resource information of a random access preamble sequence sent by UE before, a random access radio network temporary identifier (Random Access Radio Network Temporary Identifier, RA-RNTI), and scrambles the PDCCH by using the RA-RNTI. In this embodiment of this application, because before sending the D2D-Msg-2 and the new Msg-2, the base station has determined the TUE and a C-RNTI of the CUE corresponding to the TUE, the base station may scramble the PDCCH by using the C-RNTI. Alternatively, the base station may add corresponding signaling in downlink control information (Downlink Control Information, DCI) to indicate whether a current PDSCH carries the D2D-Msg-2, the new Msg-2, or other downlink data.

By using the foregoing manner, the base station may quickly determine a type of the received third message or a type of the received fourth message.

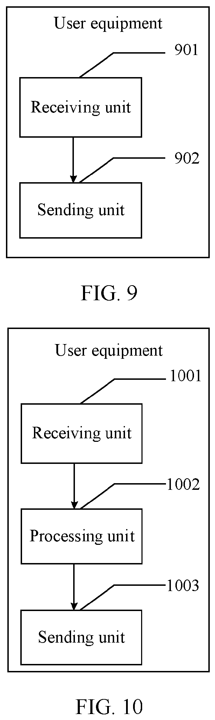

Based on the same inventive concept as the method embodiments, this application further provides user equipment shown in FIG. 9, including:
a receiving unit 901, configured to receive a first message sent by target user equipment TUE, where the first message includes a first preamble sequence and a data part of the TUE, and the first preamble sequence is used for random access between the TUE and the NUE;
a sending unit 902, configured to send a second message to a base station, where the second message includes a second preamble sequence and a data part of the NUE, and the second preamble sequence is used for random access between the NUE and the base station; where
the receiving unit 901 is further configured to receive a third message sent by the base station, and the third message includes a user equipment cooperation group identifier.

In this embodiment of this application, user equipment is provided. Based on the received first message sent by the TUE, if the NUE is willing to participate in user equipment cooperation of the TUE, the NUE sends the second message to the base station. After receiving the second message, the base station determines a user equipment cooperation group to which the NUE belongs, and sends the user equipment cooperation group identifier to the NUE. After receiving the user equipment cooperation group, the NUE determines the user equipment cooperation group to which the NUE belongs. The user equipment cooperation group is established in the foregoing manner, which reduces a delay of a group establishing process, and improves efficiency of the group establishing process.

Optionally, the data part of the TUE includes identification information of the TUE and/or user equipment cooperation request information of the TUE; and the data part of the TUE further includes type indication information, used to indicate a type of the first message.

In a possible situation, the data part of the NUE includes at least one of identification information of the NUE, identification information of the TUE, an index of the first preamble sequence, or a channel quality indicator of the TUE; and the data part of the NUE further includes type indication information, used to indicate a type of the second message.

Based on the same inventive concept as the method embodiments, this application further provides user equipment shown in FIG. 10, including:
a receiving unit 1001, configured to receive radio resource control RRC signaling sent by a base station;
a processing unit 1002, configured to determine, based on the RRC signaling, a device to device D2D physical random access channel PRACH resource that is configured by the base station for the TUE;
a sending unit 1003, configured to send a first message to neighboring user equipment NUE through the PRACH resource, where the first message includes a first preamble sequence and a data part of the TUE, and the first preamble sequence is used for random access between the TUE and the NUE; where
the receiving unit 1001 is further configured to receive a fourth message sent by the base station, and the fourth message includes a user equipment cooperation group identifier.

In a possible situation, the data part of the TUE includes identification information of the TUE and/or user equipment cooperation request information of the TUE; and the data part of the TUE further includes type indication information, used to indicate a type of the first message.

Optionally, the fourth message further includes a random access response RAR and contention resolution information; and the fourth message further includes identification information of the NUE that becomes cooperating user equipment CUE of the TUE.

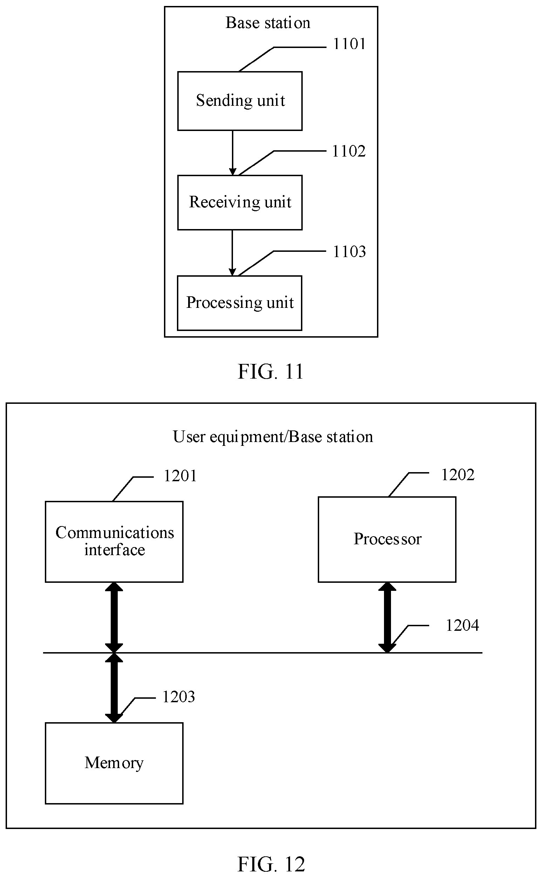

Based on the same inventive concept as the method embodiments, this application further provides a base station shown in FIG. 11, including:
a sending unit 1101, configured to send radio resource control RRC signaling to target user equipment TUE, where the RRC signaling is used to indicate a device to device D2D physical random access channel PRACH resource that is configured by the base station for the TUE;
a receiving unit 1102, configured to receive a second message sent by neighboring user equipment NUE of the TUE, where the second message includes a second preamble sequence and a data part of the NUE, and the second preamble sequence is used for random access between the NUE and the base station;
a processing unit 1103, configured to: determine, based on the second message, a user equipment cooperation group, and allocate a user equipment cooperation group identifier; where
the sending unit 1101 is further configured to send a third message to the NUE and a fourth message to the TUE, and both the third message and the fourth message include the user equipment cooperation group identifier.

In a possible situation, the third message further includes identification information of the TUE.

In a possible situation, the fourth message further includes identification information of the NUE that becomes cooperating user equipment CUE of the TUE; and the fourth message further includes a random access response RAR and contention resolution information.

Optionally, the data part of the NUE includes at least one of identification information of the NUE, identification information of the TUE, an index of a first preamble sequence, or a channel quality indicator of the TUE; and the data part of the NUE further includes type indication information, used to indicate a type of the second message.

Optionally, the identification information of the TUE is carried in a data part of the TUE in a first message sent by the TUE to the NUE through the PRACH resource.

In a possible situation, the first message includes a first preamble sequence and the data part of the TUE, and the first preamble sequence is used for random access between the TUE and the NUE.

Optionally, the data part of the TUE includes the identification information of the TUE and/or user equipment cooperation request information of the TUE; and the data part of the TUE further includes type indication information, used to indicate a type of the first message.

In a possible situation, the base station may distinguish the first message from the second message through a position of the physical random access channel PRACH resource.

Division of the modules in the embodiments of this application is only an example, and is merely logical function division. There may be other division manners during actual implementation. In addition, the functional modules in the embodiments of this application may be integrated into one processor, or each of the modules may exist alone physically, or two or more modules may be integrated into one module. The foregoing integrated module may be implemented in a hardware form or a software function module form.

When the integrated module may be implemented in the hardware form, as shown in FIG. 12, an apparatus in FIG. 12 may be configured to represent user equipment, or may be configured to represent a base station. Hardware of an entity corresponding to the foregoing processing unit may be a processor 1202. The processor 1202 may be a central processing unit (English: central processing unit, CPU for short), a digital processing module, or the like. The apparatus may further include a communications interface 1201, the processor 1202 receives a message through the communications interface 1201, and the communications interface 1201 includes the foregoing receiving unit and sending unit. The apparatus further includes a memory 1203, configured to store a program executed by the processor 1202. The memory 1203 may be a nonvolatile memory such as a hard disk drive (English: hard disk drive, abbreviation: HDD) or a solid-state drive (English: solid-state drive, abbreviation: SSD), or may be a volatile memory (English: volatile memory), for example, a random-access memory (English: random-access memory, abbreviation: RAM). The memory 1203 is any other medium that can carry or store an expected program code in a form of an instruction or a data structure and can be accessed by a computer, but is not limited thereto.

The processor 1202 is configured to execute the program code stored in the memory 1203, and is specifically configured to perform the method described in the embodiment shown in FIG. 5 or FIG. 8. The method described in the embodiment shown in FIG. 5 or FIG. 8 can be referred to, and details in this application are not described herein.

A specific connection medium between the communications interface 1201, the processor 1202, and the memory 1203 is not limited in this embodiment of this application. In this embodiment of this application, in FIG. 12, the memory 1203, the processor 1202, and the communications interface 1201 are connected to each other through a bus 1204. The bus is represented by using a bold line in FIG. 12. A manner of connection between other components is only schematically described, but is not used as a limitation. The bus may be classified into an address bus, a data bus, a control bus, and the like. For ease of representation, the bus is represented by using only one bold line in FIG. 10. However, it does not mean that there is only one bus or only one type of bus.

An embodiment of this application further provides a computer-readable storage medium, configured to store a computer software instruction that requires to be executed for performing the processor. The computer software instruction that requires to be performed is executed, so that the foregoing method embodiments can be implemented.

Some wordings in this application are explained below for ease of understanding by a person skilled in the art.
(1) User equipment in the embodiments of this application may alternatively be referred to as a terminal device, and is a device in which various communications applications can be installed or that has a communications function. For example, the terminal device is a smartphone, a tablet computer, various wearable devices, a vehicular device, a computer, or the like.
(2) In descriptions of this application, words such as "first" and "second" are merely intended for purposes of description, and should not be understood as indicating or implying relative importance or a sequence.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or any other programmable device provide steps for implementing a specific function in one or more processes in the flowcharts and/or in one or more blocks in the block diagrams.

## Claims

1. A method for establishing a user equipment cooperation group, comprising:
receiving (S501), by neighboring user equipment NUE, a first message sent by target user equipment TUE, wherein the first message comprises a first preamble sequence and a data part of the TUE, and the first preamble sequence is used for random access between the TUE and the NUE;
sending (S502), by the NUE, a second message to a base station, wherein the second message comprises a second preamble sequence and a data part of the NUE, and the second preamble sequence is used for random access between the NUE and the base station; and
receiving (S503), by the NUE, a third message sent by the base station, wherein the third message comprises a user equipment cooperation group identifier, wherein the data part of the TUE comprises identification information of the TUE and user equipment cooperation request information of the TUE.

2. The method according to claim 1, wherein the data part of the TUE further comprises type indication information, used to indicate a type of the first message.

3. The method according to claim 1, wherein the data part of the NUE comprises at least one of identification information of the NUE, identification information of the TUE, an index of the first preamble sequence, or a channel quality indicator of the TUE.

4. The method according to claim 3, wherein the data part of the NUE further comprises type indication information, used to indicate a type of the second message.

5. User equipment, comprising:
a receiving unit (901), configured to receive a first message sent by target user equipment TUE, wherein the first message comprises a first preamble sequence and a data part of the TUE, and the first preamble sequence is used for random access between the TUE and the NUE;
a sending unit (902), configured to send a second message to a base station, wherein the second message comprises a second preamble sequence and a data part of the NUE, and the second preamble sequence is used for random access between the NUE and the base station; wherein
the receiving unit is further configured to receive a third message sent by the base station, and the third message comprises a user equipment cooperation group identifier, wherein the data part of the TUE comprises identification information of the TUE and user equipment cooperation request information of the TUE.

6. The user equipment according to claim 5, wherein the data part of the TUE further comprises type indication information, used to indicate a type of the first message.

7. The user equipment according to claim 5, wherein the data part of the NUE comprises at least one of identification information of the NUE, identification information of the TUE, an index of the first preamble sequence, or a channel quality indicator of the TUE.

8. The user equipment according to claim 7, wherein the data part of the NUE further comprises type indication information, used to indicate a type of the second message.

9. User equipment, comprising:
a receiving unit (1001), configured to receive radio resource control RRC signaling sent by a base station;
a processing unit (1002), configured to determine, based on the RRC signaling, a device to device D2D physical random access channel PRACH resource that is configured by the base station for the TUE;
a sending unit (1003), configured to send a first message to neighboring user equipment NUE through the PRACH resource, wherein the first message comprises a first preamble sequence and a data part of the TUE, and the first preamble sequence is used for random access between the TUE and the NUE; wherein
the receiving unit is further configured to receive a fourth message sent by the base station, and the fourth message comprises a user equipment cooperation group identifier, wherein the data part of the TUE comprises identification information of the TUE and user equipment cooperation request information of the TUE.

10. A base station, comprising:
a sending unit (1101), configured to send radio resource control RRC signaling to target user equipment TUE, wherein the RRC signaling is used to indicate a device to device D2D physical random access channel PRACH resource that is configured by the base station for the TUE;
a receiving unit (1102), configured to receive a second message sent by neighboring user equipment NUE of the TUE, wherein the second message comprises a second preamble sequence and a data part of the NUE, and the second preamble sequence is used for random access between the NUE and the base station;
a processing unit, configured to: determine, based on the second message, a user equipment cooperation group, and allocate a user equipment cooperation group identifier, wherein
the sending unit is further configured to send a third message to the NUE and a fourth message to the TUE, and both the third message and the fourth message comprise the user equipment cooperation group identifier, wherein the third message further comprises identification information of the TUE.

11. A computer-readable storage medium, wherein the computer-readable storage medium stores a computer instruction, and when the instruction is run on a computer, the computer is caused to perform the method according to any one of claims 1 to 4.

## Patentansprüche

1. Verfahren zur Festlegung einer Benutzereinrichtungs-Kooperationsgruppe, umfassend:
Empfangen (S501) einer ersten Nachricht, die durch eine Zielbenutzereinrichtung, TUE, gesendet wird, an einer benachbarten Benutzereinrichtung, NUE, wobei die erste Nachricht eine erste Präambelsequenz und ein Datenteil der TUE umfasst, und die erste Präambelsequenz für wahlfreien Zugriff zwischen der TUE und der NUE verwendet wird;
Senden (S502) einer zweiten Nachricht an eine Basisstation durch die NUE, wobei die zweite Nachricht eine zweite Präambelsequenz und ein Datenteil der NUE umfasst, und die zweite Präambelsequenz für wahlfreien Zugriff zwischen der NUE und der Basisstation verwendet wird; und
Empfangen (S503) einer dritten Nachricht, die durch die Basisstation gesendet wird, an der NUE, wobei die dritte Nachricht einen Identifikator einer Benutzereinrichtungs-Kooperationsgruppe umfasst, wobei das Datenteil der TUE Identifikationsinformationen der TUE und Benutzereinrichtungs-Kooperationsanforderungsinformationen der TUE umfasst.

2. Verfahren gemäß Anspruch 1, wobei das Datenteil der TUE des Weiteren Typangabeinformationen umfasst, die zum Angeben eines Typs der ersten Nachricht verwendet werden.

3. Verfahren gemäß Anspruch 1, wobei das Datenteil der NUE mindestens eines von Identifikationsinformationen der NUE, Identifikationsinformationen der TUE, einem Index der ersten Präambelsequenz oder einem Kanalqualitätsindikator der TUE umfasst.

4. Verfahren gemäß Anspruch 3, wobei das Datenteil der NUE des Weiteren Typangabeinformationen umfasst, die zum Angeben eines Typs der zweiten Nachricht verwendet werden.

5. Benutzereinrichtung, umfassend:
eine Empfangseinheit (901), die konfiguriert ist zum Empfangen einer ersten Nachricht, die durch eine Zielbenutzereinrichtung, TUE, gesendet wird, wobei die erste Nachricht eine erste Präambelsequenz und ein Datenteil der TUE umfasst, und die erste Präambelsequenz für wahlfreien Zugriff zwischen der TUE und der NUE verwendet wird;
eine Sendeeinheit (902), die konfiguriert ist zum Senden einer zweiten Nachricht an eine Basisstation, wobei die zweite Nachricht eine zweite Präambelsequenz und ein Datenteil der NUE umfasst, und die zweite Präambelsequenz für wahlfreien Zugriff zwischen der NUE und der Basisstation verwendet wird; wobei
die Empfangseinheit des Weiteren konfiguriert ist zum Empfangen einer dritten Nachricht, die durch die Basisstation gesendet wird, und die dritte Nachricht einen Identifikator einer Benutzereinrichtungs-Kooperationsgruppe umfasst, wobei das Datenteil der TUE Identifikationsinformationen der TUE und Benutzereinrichtungs-Kooperationsanforderungsinformationen der TUE umfasst.

6. Benutzereinrichtung gemäß Anspruch 5, wobei das Datenteil der TUE des Weiteren Typangabeinformationen umfasst, die zum Angeben eines Typs der ersten Nachricht verwendet werden.

7. Benutzereinrichtung gemäß Anspruch 5, wobei das Datenteil der NUE mindestens eines von Identifikationsinformationen der NUE, Identifikationsinformationen der TUE, einem Index der ersten Präambelsequenz oder einem Kanalqualitätsindikator der TUE umfasst.

8. Benutzereinrichtung gemäß Anspruch 7, wobei das Datenteil der NUE des Weiteren Typangabeinformationen umfasst, die zum Angeben eines Typs der zweiten Nachricht verwendet werden.

9. Benutzereinrichtung, umfassend:
eine Empfangseinheit (1001), die konfiguriert ist zum Empfangen von Funkressourcensteuerungs-, RRC-, Signalisierung, die durch eine Basisstation gesendet wird;
eine Verarbeitungseinheit (1002), die konfiguriert ist zum Bestimmen einer Gerät-zu-Gerät, D2D, physischen Direktzugriffskanal, PRACH, Ressource, die durch die Basisstation für die TUE konfiguriert worden ist, basierend auf der RRC-Signalisierung;
eine Sendeeinheit (1003), die konfiguriert ist zum Senden einer ersten Nachricht an eine benachbarte Benutzereinrichtung, NUE, durch die PRACH-Ressource, wobei die erste Nachricht eine erste Präambelsequenz und ein Datenteil der TUE umfasst, und die erste Präambelsequenz für wahlfreien Zugriff zwischen der TUE und der NUE verwendet wird;
wobei
die Empfangseinheit des Weiteren konfiguriert ist zum Empfangen einer vierten Nachricht, die durch die Basisstation gesendet wird, und die vierte Nachricht einen Identifikator einer Benutzereinrichtungs-Kooperationsgruppe umfasst, wobei das Datenteil der TUE Identifikationsinformationen der TUE und Benutzereinrichtungs-Kooperationsanforderungsinformationen der TUE umfasst.

10. Basisstation, umfassend:
eine Sendeeinheit (1101), die konfiguriert ist zum Senden von Funkressourcensteuerungs-, RRC-, Signalisierung an eine Zielbenutzereinrichtung, TUE, wobei die RRC-Signalisierung zum Angeben einer Gerät-zu-Gerät, D2D, physischen Direktzugriffskanal, PRACH, Ressource verwendet wird, die durch die Basisstation für die TUE konfiguriert worden ist;
eine Empfangseinheit (1102), die konfiguriert ist zum Empfangen einer zweiten Nachricht, die durch eine der TUE benachbarte Benutzereinrichtung, NUE, gesendet wird, wobei die zweite Nachricht eine zweite Präambelsequenz und ein Datenteil der NUE umfasst, und die zweite Präambelsequenz für wahlfreien Zugriff zwischen der NUE und der Basisstation verwendet wird;
eine Verarbeitungseinheit, die konfiguriert ist zum: Bestimmen einer Benutzereinrichtungs-Kooperationsgruppe und Zuweisen eines Identifikators der Benutzereinrichtungs-Kooperationsgruppe basierend auf der zweiten Nachricht, wobei
die Sendeeinheit des Weiteren konfiguriert ist zum Senden einer dritten Nachricht an die NUE und einer vierten Nachricht an die TUE, und wobei sowohl die dritte Nachricht als auch die vierte Nachricht den Identifikator der Benutzereinrichtungs-Kooperationsgruppe umfassen, wobei die dritte Nachricht des Weiteren Identifikationsinformationen der TUE umfasst.

11. Computerlesbares Speichermedium, wobei das computerlesbare Speichermedium eine Computeranweisung speichert, und veranlasst wird, dass der Computer das Verfahren gemäß einem der Ansprüche 1 bis 4 ausführt, wenn die Anweisung auf einem Computer ausgeführt wird.

## Revendications

1. Procédé d'établissement d'un groupe de coopération d'équipements d'utilisateur, comprenant :
la réception (S501), par un équipement d'utilisateur voisin NUE, d'un premier message envoyé par un équipement d'utilisateur cible TUE, le premier message comprenant une première séquence de préambule et une partie de données du TUE, et la première séquence de préambule étant utilisée pour un accès aléatoire entre le TUE et le NUE ;
l'envoi (S502), par le NUE, d'un deuxième message à une station de base, le deuxième message comprenant une seconde séquence de préambule et une partie de données du NUE, et la seconde séquence de préambule étant utilisée pour un accès aléatoire entre le NUE et la station de base ; et
la réception (S503), par le NUE, d'un troisième message envoyé par la station de base, le troisième message comprenant un identifiant de groupe de coopération d'équipements d'utilisateur, la partie de données du TUE comprenant des informations d'identification du TUE et des informations de requête de coopération d'équipements d'utilisateur du TUE.

2. Procédé selon la revendication 1, la partie de données du TUE comprenant en outre des informations d'indication de type, utilisées pour indiquer un type du premier message.

3. Procédé selon la revendication 1, la partie de données du NUE comprenant au moins l'un parmi des informations d'identification du NUE, des informations d'identification du TUE, un indice de la première séquence de préambule, ou un indicateur de qualité de canal du TUE.

4. Procédé selon la revendication 3, la partie de données du NUE comprenant en outre des informations d'indication de type, utilisées pour indiquer un type du deuxième message.

5. Équipement d'utilisateur, comprenant :
une unité de réception (901), configurée pour recevoir un premier message envoyé par un équipement d'utilisateur cible TUE, le premier message comprenant une première séquence de préambule et une partie de données du TUE, et la première séquence de préambule étant utilisée pour un accès aléatoire entre le TUE et le NUE ;
une unité d'envoi (902), configurée pour envoyer un deuxième message à une station de base, le deuxième message comprenant une seconde séquence de préambule et une partie de données du NUE, et la seconde séquence de préambule étant utilisée pour un accès aléatoire entre le NUE et la station de base ;
l'unité de réception étant en outre configurée pour recevoir un troisième message envoyé par la station de base, et le troisième message comprenant un identifiant de groupe de coopération d'équipements d'utilisateur, la partie de données du TUE comprenant des informations d'identification du TUE et des informations de requête de coopération d'équipements d'utilisateur du TUE.

6. Équipement d'utilisateur selon la revendication 5, la partie de données du TUE comprenant en outre des informations d'indication de type, utilisées pour indiquer un type du premier message.

7. Équipement d'utilisateur selon la revendication 5, la partie de données du NUE comprenant au moins l'un parmi des informations d'identification du NUE, des informations d'identification du TUE, un indice de la première séquence de préambule, ou un indicateur de qualité de canal du TUE.

8. Équipement d'utilisateur selon la revendication 7, la partie de données du NUE comprenant en outre des informations d'indication de type, utilisées pour indiquer un type du deuxième message.

9. Équipement d'utilisateur, comprenant :
une unité de réception (1001), configurée pour recevoir une signalisation de commande de ressources radio RRC envoyée par une station de base ;
une unité de traitement (1002), configurée pour déterminer, sur la base de la signalisation RRC, une ressource de canal d'accès aléatoire physique de dispositif à dispositif D2D PRACH qui est configurée par la station de base pour le TUE ;
une unité d'envoi (1003), configurée pour envoyer un premier message à un équipement d'utilisateur voisin NUE par l'intermédiaire de la ressource PRACH, le premier message comprenant une première séquence de préambule et une partie de données du TUE, et la première séquence de préambule étant utilisée pour un accès aléatoire entre le TUE et le NUE;
l'unité de réception étant en outre configurée pour recevoir un quatrième message envoyé par la station de base, et le quatrième message comprenant un identifiant de groupe de coopération d'équipements d'utilisateur, la partie de données du TUE comprenant des informations d'identification du TUE et des informations de requête de coopération d'équipements d'utilisateur du TUE.

10. Station de base, comprenant :
une unité d'envoi (1101), configurée pour envoyer une signalisation de commande de ressources radio RRC à un équipement d'utilisateur cible TUE, la signalisation RRC étant utilisée pour indiquer une ressource de canal d'accès aléatoire physique de dispositif à dispositif D2D PRACH qui est configurée par la station de base pour le TUE ;
une unité de réception (1102), configurée pour recevoir un deuxième message envoyé par un équipement d'utilisateur voisin NUE du TUE, le deuxième message comprenant une seconde séquence de préambule et une partie de données du NUE, et la seconde séquence de préambule étant utilisée pour un accès aléatoire entre le NUE et la station de base ;
une unité de traitement, configurée pour : déterminer, sur la base du deuxième message, un groupe de coopération d'équipements d'utilisateur, et allouer un identifiant de groupe de coopération d'équipements d'utilisateur,
l'unité d'envoi étant en outre configurée pour envoyer un troisième message au NUE et un quatrième message au TUE, et le troisième message et le quatrième message comprenant l'identifiant de groupe de coopération d'équipements d'utilisateur, le troisième message comprenant en outre des informations d'identification du TUE.

11. Support de stockage lisible par ordinateur, le support de stockage lisible par ordinateur stockant une instruction informatique, et lorsque l'instruction est exécutée sur un ordinateur, l'ordinateur étant amené à réaliser le procédé selon l'une quelconque des revendications 1 à 4.
